# EUROPÄISCHE PATENTANMELDUNG

(11) **EP 1 261 107 A1**
(43) Veröffentlichungstag der Anmeldung: **27.11.2002**
(21) Anmeldenummer: 02009931.3
(22) Anmeldetag: 03.05.2002
(51) Int. Cl.: H02K 5/10, H02K 5/15, H02K 5/173, H02K 21/22

(54) **Spindelmotor mit Gehäuseteil in Festplattenlaufwerken**

(30) Priorität: 25.05.2001 DE 20108787 U
(71) Anmelder: Minebea Co., Ltd, Tokyo 153 0064 (JP)
(72) Erfinder: Jörg Hoffmann, 66693 Mettlach (DE); Matthias Wildpreth, 78048 Villingen-Schwenningen (DE); Martin Hafen, 78050 Villingen-Schwenningen (DE)
(74) Vertreter: Riebling, Peter, Dr.-Ing.

(57) **Zusammenfassung**

Die Erfindung betrifft einen Spindelmotor, umfassend ein Gehäuseteil mit einem horizontalen Flanschteil und einer vertikal ausgerichteten Aufnahmehülse zur Aufnahme und Befestigung einer entsprechenden Lageranordnungen. Erfindungsgemäß ist ein mit dem horizontalen Flanschteil einstückig verbundenes Bodenteil vorgesehen, das die Aufnahmehülse einseitig verschließt. Somit kann auf die Montage eines separaten Deckels zum Verschluss der Aufnahmehülse verzichtet werden.

## Beschreibung

Die Erfindung betrifft einen Spindelmotor mit einem Gehäuseteil (Basisplatte, Flansch o.ä.), vorzugsweise zur Verwendung in Festplattenlaufwerken, wobei das Gehäuseteil im Bereich des Motors in der Regel einen horizontalen Flanschbereich aufweist, in dessen Zentrum eine Hülse zur Aufnahme des mittels entsprechender Lager drehgelagerten Rotors angeordnet ist. Die Hülse ist in bekannter Weise beidseitig offen und dient, wie bereits erwähnt, zur Aufnahme des drehgelagerten Rotors, wobei jeweils der feststehende Teil der Lageranordnung, mit welcher der Rotor gegenüber dem Gehäuse drehgelagert ist, an der Innenseite der Aufnahmehülse befestigt wird. Bei Wälzlagern können das beispielsweise der oder die Außenringe sein, bei einem flüssigkeitsgeschmierten Radiallager wäre dies dann sinngemäß die Lagerbuchse.

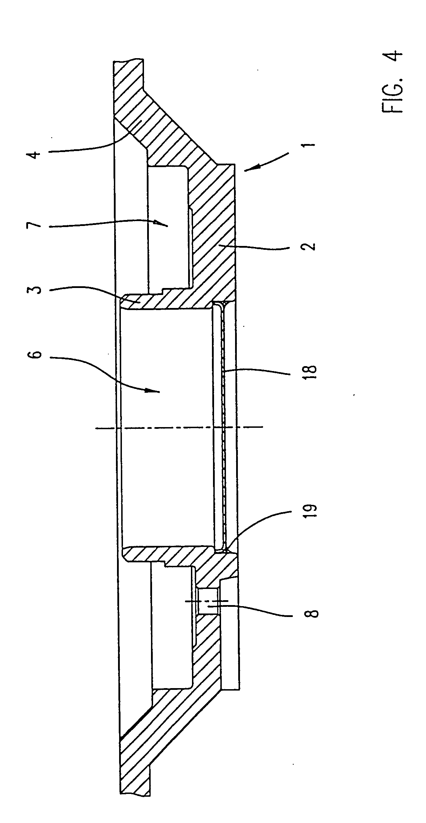

Zum Schutz der Lageranordnung und um das Eindringen von partikelbelasteter Umgebungsatmosphäre in das Festplattenlaufwerk auszuschließen, ist nach dem Stand der Technik, wie in Fig. 4 dargestellt, bekannt, die untere Öffnung der Aufnahmehülse mit einem Deckel zu verschließen. Dieser Deckel wird vorzugsweise am unteren Rand der Aufnahmehülse eingeklebt, so dass sich eine gute Abdichtung der Aufnahmehülse nach außen ergibt.
Nach dem Stand der Technik wird dazu ein im wesentlichen als scheibenförmiger Körper ausgebildeter Deckel verwendet, bedarfsweise mit einem ringsumlaufenden Rand, welcher in die entsprechend ausgesparte Aufnahmehülse eingesetzt, durch Klebstoff befestigt und abgedichtet wird. Nachteilig ist hierbei, dass der Deckel in einem gesonderten Arbeitsgang eingeklebt werden muss, wobei zusätzlicher Einbauraum vorzusehen ist, um den Deckel unterzubringen und verkleben zu können. Dadurch wird die für den elektrischen Antrieb verfügbare axiale Nutzhöhe verringert.

In der US 5,783,886 ist ein Gehäuseteil eines Spindelmotors mit einseitig verschlossener Aufnahmehülse offenbart, wobei zur Drehlagerung des Rotors eine passive Magnetlageranordnung verwendet wird, die mit einer erfindungsgemäß verwendeten Wälzlageranordnung nicht vergleichbar ist.

Die Aufgabe der Erfindung besteht darin, einen Spindelmotor mit Gehäuseteil und einer Wälzlageranordnung derart weiterzubilden, dass die oben beschriebenen Nachteile hinsichtlich Arbeitsaufwand und Platzbedarf in Zusammenhang mit dem Einbringen eines Deckels vermieden werden.

Diese Aufgabe wird erfindungsgemäß durch die Merkmale des Patentanspruches 1 gelöst.

Danach umfasst das der Spindelmotor ein Gehäuseteil mit einem horizontalen Flanschteil, eine vertikal ausgerichtete Aufnahmehülse zur Aufnahme und Befestigung einer aus zwei Wälzlagern mit mindestens einem Innenring und einem Außenring bestehenden Lageranordnung zur Lagerung einer einen Rotor tragenden Welle, und ein mit dem horizontalen Flanschteil einstückig verbundenes Bodenteil, das die Aufnahmehülse, an deren Innenumfang der gemeinsame Außenring der Lageranordnung befestigt ist, einseitig verschließt

Diese Gestaltung der Aufnahmehülse hat den Vorteil, dass die Aufnahmehülse einerseits nach außen einwandfrei gegen Eindringen von Schmutz geschützt ist, und andererseits die Montage eines separaten Deckels sowie das nachfolgende Einkleben und Abdichten dieses Deckels vollständig entfällt. Hierdurch ergibt sich eine Reduktion des benötigten Montageaufwandes. Ein weiterer Vorteil besteht darin, dass durch die in das Gehäuseteil integrierte Abdeckung die Steifigkeit dieses Gehäuseteils erhöht wird, was die Laufeigenschaften des Spindelmotors verbessert. Ferner kann die axiale Bauhöhe des Gehäuseteils verringert werden, da die integrierte Abdeckung (wesentlich) weniger axialen Bauraum beansprucht, als für die Einbringung eines separaten Deckels notwendig ist.

Vorzugsweise ist der die Aufnahmehülse verschließende Boden in seiner Dicke geringer, ja sogar wesentlich geringer ausgebildet, als das horizontale Flanschteil selbst.

Im Folgenden wird die Erfindung anhand von Ausführungsbeispielen unter Bezugnahme auf die Zeichnungsfiguren näher erläutert. Hierbei ergeben sich weitere Merkmale, Vorteile und Anwendungsformen der Erfindung.

### Es zeigen:

- Fig. 1:: Schnitt durch ein Gehäuseteil mit einseitig verschlossener Aufnahmehülse;
- Fig. 2:: Schnitt durch ein Gehäuseteil mit einseitig verschlossener Aufnahmehülse;
- Fig. 3:: Schnitt durch einen Spindelmotor mit einseitig verschlossener Aufnahmehülse;
- Fig. 4:: eine Basisplatte nach dem Stand der Technik mit separat in die Aufnahmehülse eingeklebtem Deckel;
- Figur 5:: eine anderer Ausgestaltung eines Spindelmotors mit einseitig verschlossener Hülse.

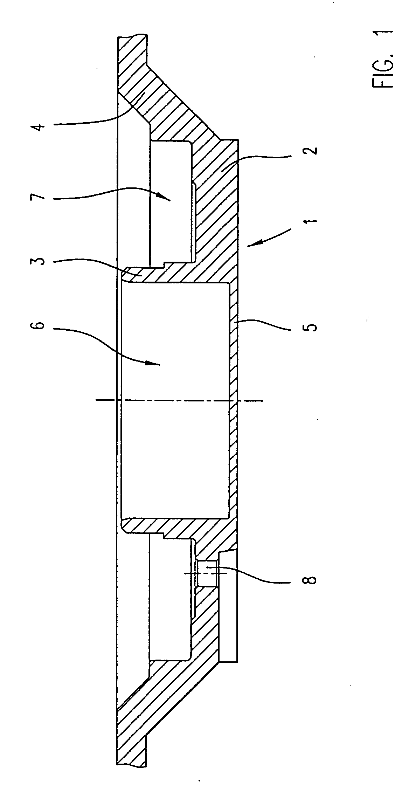

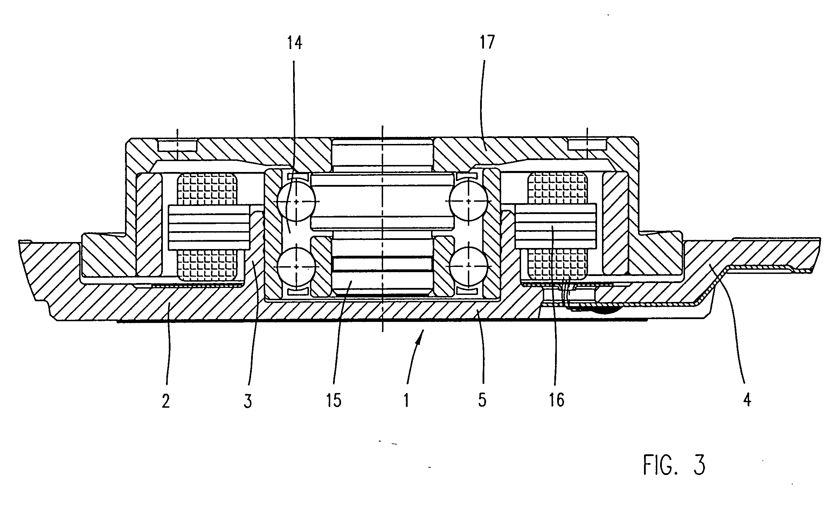

Figur 1 zeigt ein erfindungsgemäß ausgebildetes Gehäuseteil 1, wie es in einem Spindelmotor gemäß Figur 3 verwendet werden kann.

Das Gehäuseteil 1 umfasst ein etwa horizontal angeordnetes Flanschteil 2, in dessen Zentralbereich eine Aufnahmehülse 3 angeordnet ist, die einen Aufnahmeraum 6 zur Aufnahme einer Lageranordnung 14 und der Welle 15 des Spindelmotors ausbildet, so wie es in Figur 3 dargestellt ist. Am äußeren Rand geht das horizontale Flanschteil 2 in einen etwa kegelstumpfförmigen Wandbereich 4 über und bildet einen weiteren ringförmigen Aufnahmeraum 7 in dem der elektromagnetische Kreis des Motors mit dem Permanentmagneten, dem Stator 16 und Teilen des Rotors 17 aufgenommen wird, wobei der Rotor 17 zusammen mit der Welle 15 rotiert.

Das Gehäuseteil 1 weist nun erfindungsgemäß ein Bodenteil 5 auf, das einstückig mit dem horizontalen Flanschteil 2 ausgebildet ist und welches die Aufnahmehülse 3 nach unten vollständig verschließt. Somit wird ein Eindringen von Schmutz in die Lageranordnung 14 verhindert und die Steifigkeit des Gehäuseteils 1 erhöht.

Zur Durchführung von Kabeln und Leitungen kann das Gehäuseteil 1 eine Durchgangsöffnung 8 aufweisen.

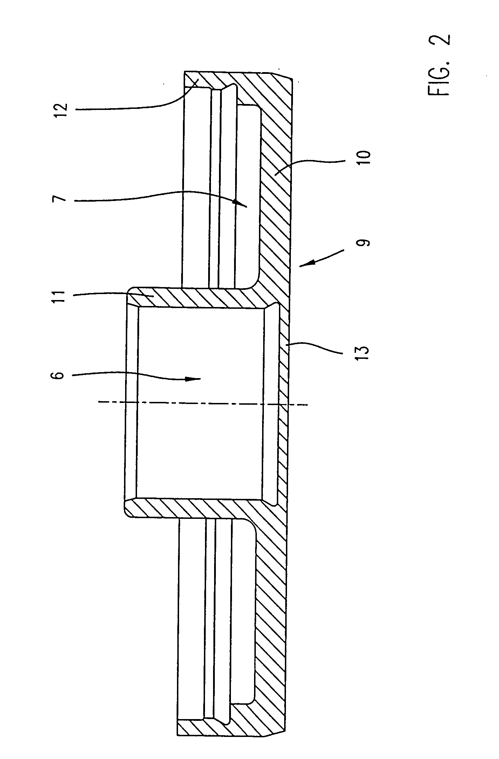

Figur 2 zeigt eine andere Ausführungsform eines erfindungsgemäßen Gehäuseteils 9, das im Wesentlichen dieselben Merkmale aufweist, wie das oben beschriebene Gehäuseteil 1.

Das Gehäuseteil 9 weist ebenfalls ein horizontales Flanschteil 10 auf, welches in die im Zentrum angeordnete Aufnahmehülse 11 übergeht. Am äußeren Rand ist eine Wandung 12 vorgesehen, welche den Aufnahmeraum 7 für den Stator ausbildet. Auch hier ist die Aufnahmehülse 11 erfindungsgemäß durch ein Bodenteil 13 einseitig verschlossen.

Figur 3 zeigt einen Schnitt durch einen Spindelmotor mit erfindungsgemäßem Gehäuseteil 1, wobei die Komponenten des Spindelmotors bereits im Zusammenhang mit Figur 1 beschrieben wurden. Wesentlich ist, dass der Motor durch den in dem Gehäuseteil 1 integrierten Boden 5 einseitig vollständig nach unten verschlossen ist und die aufwändige Montage eines separaten Deckels, wie sie beim Stand der Technik gemäß Figur 4 notwendig war, entfällt.

Figur 4 zeigt ein zu Figur 1 nahezu identisch ausgebildetes Gehäuseteil 1 gemäss dem Stand der Technik, dessen Aufnahmehülse 3 jedoch beidseitig offen ausgebildet ist, d.h., das Gehäuseteil 1 besitzt unten eine etwa kreisrunde, zentrische Öffnung, die nach der Montage der Lageranordnung und der Welle durch einen Deckel 18 abgedeckt und verschlossen wurde, um ein Eindringen von Schmutz zu verhindern. Der Deckel 18 wurde vorzugsweise durch Klebstoff 19, der ringsumlaufend angebracht wurde, am unteren Bereich der Aufnahmehülse 3 eingeklebt. Dies bedeutete einen hohen Material- und Montageaufwand, welcher durch die Erfindung vermieden wird.

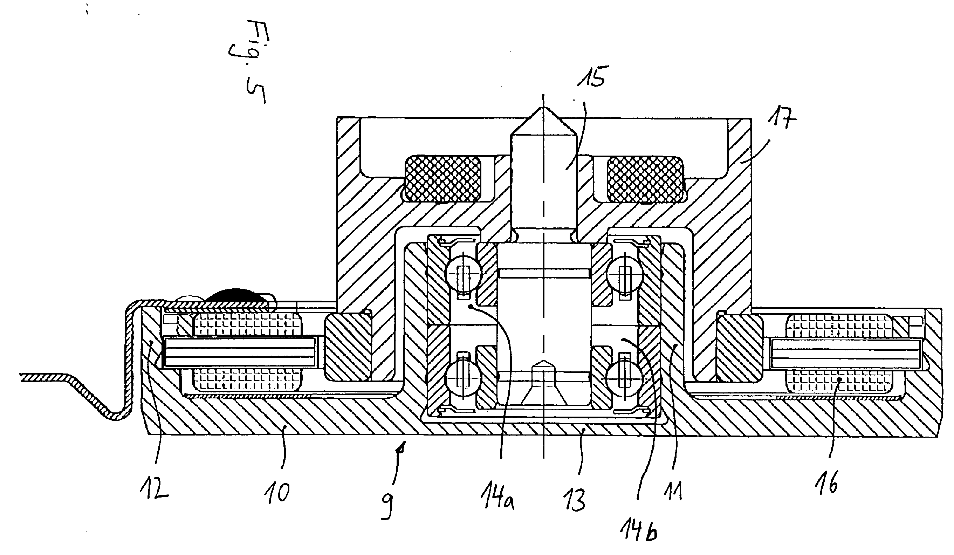

Figur 5 zeigt eine andere Ausgestaltung eines Spindelmotors mit einem erfindungsgemäß ausgebildeten Gehäuseteil 9.
Der Aufbau des Gehäuseteils 9 wurde bereits im Zusammenhang mit Figur 2 beschrieben. Die Aufnahmehülse 11 bildet einen Aufnahmeraum zur Aufnahme einer Lageranordnung 14a, 14b und der Welle 15 des Spindelmotors aus.

Die Lageranordnung umfasst zwei separate Wälzlager 14a, 14b. Jedes Wälzlager besteht aus einem mit der Welle 15 fest verbundenen Innenring und einem mit der Aufnahmehülse 11 fest verbundenen Außenring. Zwischen den Innen- und Außenringen sind entsprechende Wälzkörper angeordnet.

### Zeichnungslegende

- 1: Gehäuseteil
- 2: Flanschteil
- 3: Aufnahmehülse
- 4: Wandbereich
- 5: Bodenteil
- 6: Aufnahmeraum
- 7: Aufnahmeraum
- 8: Öffnung

- 9: Gehäuseteil
- 10: Flanschteil
- 11: Aufnahmehülse
- 12: Wandung
- 13: Bodenteil

- 14: Lageranordnung
- 15: Welle
- 16: Stator
- 17: Rotor

- 18: Deckel
- 19: Klebstoff

## Patentansprüche

1. Spindelmotor, insbesondere zum Antrieb von Festplattenlaufwerken, umfassend ein Gehäuseteil (1; 9) mit einem horizontalen Flanschteil (2; 10), einer vertikal ausgerichteten Aufnahmehülse (3; 11) zur Aufnahme und Befestigung einer aus zwei Wälzlagern (14a, 14b) mit mindestens einem Innenring und einem Außenring bestehenden Lageranordnung (14) zur Lagerung einer einen Rotor (17) tragenden Welle (15), und einem mit dem horizontalen Flanschteil (2; 10) einstückig verbundenen Bodenteil (5; 13), das die Aufnahmehülse (3; 11); an deren Innenumfang der gemeinsame Außenring der Lageranordnung (14) befestigt ist, einseitig verschließt.

2. Spindelmotor nach Anspruch 1, **dadurch gekennzeichnet, dass** die Dicke des Bodenteils (5; 13) geringer ist, als die Dicke des horizontalen Flanschteils (2; 10).

3. Spindelmotor nach einem der Ansprüche 1 oder 2, **dadurch gekennzeichnet, dass** die Lageranordnung (14) gegenüber dem Bodenteil (5; 13) der Aufnahmehülse (3; 11) geringfügig beabstandet ist.

4. Spindelmotor nach einem der Ansprüche 1 bis 3, **dadurch gekennzeichnet**, das die Wälzlager (14a, 14b) einen gemeinsamen Außenring aufweisen.

5. Spindelmotor nach einem der Ansprüche 1 bis 3, **dadurch gekennzeichnet, dass** die Wälzlager (14a, 14b) separate Außenringe aufweisen.

6. Spindelmotor nach einem der Ansprüche 1 bis 3, **dadurch gekennzeichnet, dass** der Stator (16) des Spindelmotors am Außenumfang der Aufnahmehülse (3; 11) befestigt ist.
